# EUROPÄISCHE PATENTSCHRIFT

(11) **EP 1 350 041 B1**
(45) Veröffentlichungstag und Bekanntmachung des Hinweises auf die Patenterteilung: **24.05.2006**
(21) Anmeldenummer: 01984878.7
(22) Anmeldetag: 20.12.2001
(51) Int. Cl.: F16F 9/32, F16J 1/12

(54) **KOLBENBEFESTIGUNG**
PISTON FIXING DEVICE
DISPOSITIF DE FIXATION DE PISTON

(30) Priorität: 08.01.2001 DE 10100452
(43) Veröffentlichungstag der Anmeldung: 08.10.2003
(73) Patentinhaber: ZF Sachs AG, 97424 Schweinfurt (DE)
(72) Erfinder: BAALMANN, Helmut, 97493 Bergrheinfeld (DE); LICHTLEIN, Oswald, 97241 Bergtheim (DE); BACH, Wolfgang, 97464 Oberwerrn (DE); SAUTER, Jürgen, 97486 Königsberg (DE); SEUFERT, Günter, 97464 Niederwerrn (DE); VOCKENTÄNZER, Norbert, 97456 Dittelbrunn (DE)
(86) Internationale Anmeldenummer: PCT/EP2001/015171
(87) Internationale Veröffentlichungsnummer: WO 2002/053933

(56) Entgegenhaltungen:
- DE-A- 2 548 049
- DE-C- 19 855 974
- GB-A- 2 163 829
- GB-A- 2 172 689
- US-A- 1 387 258
- US-A- 1 552 322
- US-A- 1 995 610
- US-A- 2 398 633
- US-A- 3 036 873
- PATENT ABSTRACTS OF JAPAN vol. 008, no. 009 (M-268), 14. Januar 1984 (1984-01-14) & JP 58 170968 A (TAIHOU KOGYO KK), 7. Oktober 1983 (1983-10-07)

## Beschreibung

### [Technisches Gebiet]

Die Erfindung betrifft eine Kolbenbefestigung entsprechend dem Oberbegriff von Patentanspruch 1.

### [Stand der Technik]

Aus der DE 198 55 974 C1 ist eine Befestigung eines Dämpfkolbens auf einer Kolbenstange bekannt, bei der als Befestigungsmittel ein Schließring verwendet wird, der durch eine radial wirkende Deformation in mehrere in Reihe ausgeführte Vertiefungen der Kolbenstange eingreift. Eine Anforderung an diese Art der Befestigung ist darin zu sehen, dass der Schließring aus einem gut, insbesondere rissfrei umformbaren Werkstoff bestehen muss.

Die DE 34 29 473 A1 beschreibt eine Verschraubungssicherung, bei der ein Gewinde der Kolbenstange und ein Gegengewinde eines Befestigungsmittels maßlich geringfügig abweichend zueinander ausgeführt sind. Diese Abweichung führt zu einer stark erhöhten Reibkraft innerhalb der Gewindeverbindung, wodurch der Sicherheitseffekt gegeben ist. Bei längeren Gewindewegen ist ein Differenzgewinde, insbesondere wenn auf das Gewinde noch eine weitere Befestigungsmutter gedreht werden soll, nicht einsetzbar.

Eine weitere Möglichkeit der Sicherung von Gewindeverbindungen wird in der GB 1,183,821 beschrieben.

Bei einem Normgewinde wird die Gewindemutter radial deformiert, wodurch auch die Gewindeverbindung verformt wird und ein Selbstlösen ausgeschlossen werden kann. Eine derartige radiale Deformation bedingt wiederum einen umformfähigen Werkstoff für die Gewindemutter. Des weiteren muss die Gewindemutter eine Mindesthöhe aufweisen, um eine gewisse Deformationstiefe und Breite erreichen zu können. Außerdem muss darauf geachtet werden, dass bei der Deformation der Gewindemutter die Vorspannung des Befestigungsmittels auf den Kolben erhalten bleibt.

Als weitere Sicherungsmöglichkeit wäre z. B. ein Kleber denkbar, der auf das Gewinde aufgetragen wird. Diese Möglichkeit scheidet aber aus, da die Aushärtzeit des Klebers für eine mit kurzen Arbeitstakten ausgelegte Massenfertigung zu groß ist.

Man könnte sich auch vorstellen, dass zwischen dem Befestigungsmittel und dem Gewinde der Kolbenstange ein Schweißpunkt gesetzt wird. Für das Befestigungsmittel ist aber ein Werkstoff notwendig, der gut schweißbar ist und es muss ein Schweißverfahren eingesetzt werden, das keine Schweißspritzer erzeugt.

Die US 3 036 873 beschreibt eine Kolbenbefestigung an einer Kolbenstange, wobei die Kolbenstange einen Gewindeabschnitt aufweist, der mit einem Gegengewinde einer Kolbenmutter in Eingriff steht. Eine zweite Kolbenmutter dient als Sicherungsmittel, die das Lösen des Kolbens an der Kolbenstange verhindern soll.

### [Aufgabe der Erfindung]

Aufgabe der Erfindung ist es, eine Gewindesicherung für einen an der Kolbenstange geschraubten Kolben zu realisieren, bei der die im Stand der Technik genannten Schwierigkeiten behoben sind.

### [Darstellung der Erfindung]

Erfindungsgemäß wird die Aufgabe dadurch gelöst, dass die Sicherungsmittel von deformierten Gewindeteilen der Kolbenstange gebildet wird, wobei die deformierten Gewindeteile auf einer Stirnfläche des Befestigungsmittels anliegen und die Deformation des Gewindes der Kolbenstange bis auf einen Durchmesser ausgeführt ist, der kleiner ist als der Kerndurchmesser des Gewindes.

Ein wesentlicher Vorteil der Erfindung besteht darin, dass man bei dem Herstellungsverfahren und dem Material keine Rücksicht auf die Ausgestaltung des Befestigungsmittels nehmen muss. Des weiteren sind keine Veränderungen an einem bereits bestehenden Befestigungsmittel vorzunehmen. Man kann bei jedem Anwendungsfall entscheiden, ob die Kolbenbefestigung mit Sicherungsmitteln ausgeführt werden soll oder nicht, ohne Änderungen an der Kolbenstange, dem Befestigungsmittel oder dem Kolben selbst durchführen zu müssen. Auch wenn Flanken des Gewindes abbrechen, so ist immer noch ein ausreichendes deformiertes Volumen vorhanden, das aufgrund der Kaltverfestigung beim Deformieren sehr hoch belastbar ist.

In weiterer vorteilhafter Ausgestaltung der Erfindung ist vorgesehen, dass die Deformation tangential am Gewinde ausgeführt ist. Damit ist die Fließrichtung der deformierten Teile genauer vorgegeben und die radiale Fließstrecke wird größer, um ein möglichst großes Volumen auf der Stirnfläche des Befestigungsmittels platzieren zu können.

Damit die Kolbenstange beim Ausführung der Deformation nicht einseitig auf Biegung beansprucht wird, ist die Deformation am Gewinde symmetrisch zum Querschnitt des Gewindes ausgeführt.

Eine besonders gute Dauerhaltbarkeit der deformierten Gewindeteile wird dadurch erreicht, dass die Deformation derart radial tief ausgeführt ist, dass sich die deformierten Gewindeteil gegeneinander abstützen.

Gemäß einem weiteren vorteilhaften Unteranspruch ist die Deformation parallel zur Stirnfläche des Befestigungsmittels ausgeführt. Mit der Anlage der deformierten Teile des Gewindes auf der Stirnfläche des Befestigungsmittels wird die Vorspannung des Befestigungsmittels auf den Kolben nicht beeinflusst. Man erreicht eine klare Trennung zwischen vorgespannter Befestigung des Kolbens und Sicherung des Befestigungsmittels gegen Lösen.

Des weiteren ist vorgesehen, dass auf dem Gewinde zusätzlich zu dem Befestigungsmittel eine Einstellmutter für eine Feder aufgeschraubt ist, wobei die axiale Höhe der deformierten Gewindeteile derart bemessen ist, dass ein Einstellweg zwischen den deformierten Gewindeteilen und der Einstellmutter größer ist als der Restfederweg der Feder.

Anhand der folgenden Figurenbeschreibung soll die Erfindung näher erläutert werden.

Es zeigt:
- Fig. 1: Schwingungsdämpfer in Gesamtdarstellung
- Fig. 2: Kolben mit Kolbenstangenende
- Fig. 3: Ansicht auf die Kolbenbefestigung mit Sicherung

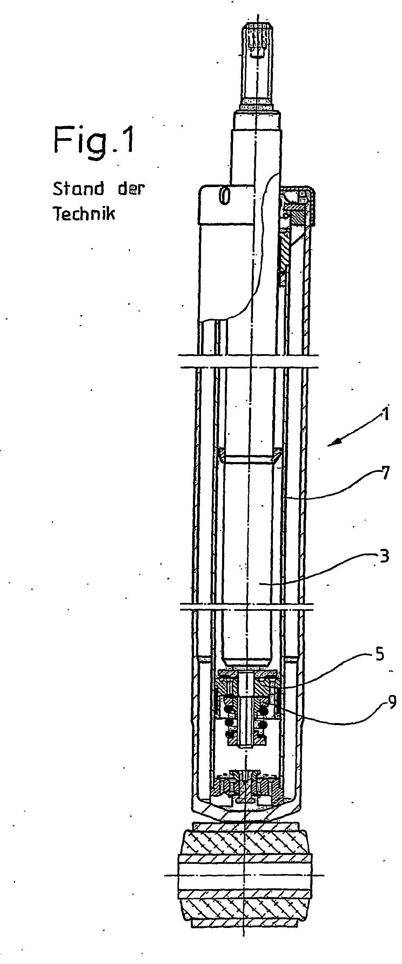

Die Fig. 1 zeigt einen an sich aus dem Stand der Technik bekannten Schwingungsdämpfer 1, der eine Kolbenstange 3 mit einem Kolben 5 aufweist, die als Baueinheit innerhalb eines Zylinders 7 axial verschiebbar angeordnet ist. Der Kolben 5 wird von einer Kolbenmutter 9 als Befestigungsmittel am Kolben axial fixiert.

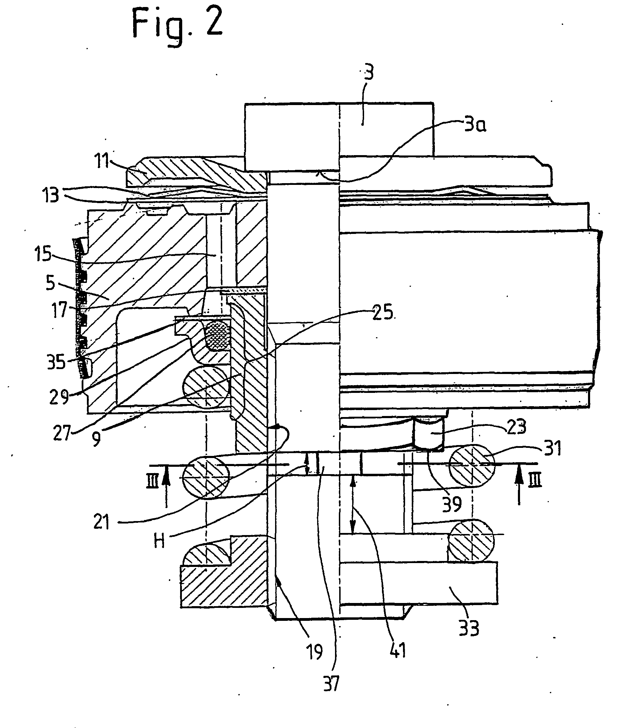

Die Fig. 2 beschränkt sich auf ein zapfenförmiges Ende der Kolbenstange 3 mit dem Kolben 5. Der Kolben verfügt über eine Anschlagscheibe 11 für eine Anzahl von Ventilscheiben 13, die den Durchfluss durch mindestens einen Strömungskanal 15 beeinflussen. Des weiteren ist eine Drosselscheibe 17 beigefügt, die den wirksamen Querschnitt des mindestens einen Strömungskanals 15 bestimmt. Dieser geschichtete Teileverband wird von der Kolbenmutter 9 axial fixiert, indem ein Gewinde 19 der Kolbenstange mit einem Gegengewinde 21 der Kolbenmutter in Eingriff steht. Die Kolbenmutter verfügt über einen Abschnitt mit Schlüsselflächen 23. Diesem Abschnitt schließt sich ein Führungsabschnitt 25 an, der auf seiner Mantelfläche einen Dichtungsring 27 in Verbindung mit einem Stützring 29 führt. Der Stützring wird von einer Feder 31 in Verbindung mit einer Einstellmutter 33 gegen eine Voröffnungsscheibe 35 gespannt. Die Voröffnungsscheibe kann sich zusammen mit dem Dichtungsring 27 und dem Stützring entlang dem Führungsabschnitt gegen die Kraft der Feder 31 bewegen, wenn ein entsprechender Druck im Strömungskanal 15 ansteht. Die Länge des Führungsabschnitts ist größer als der maximale Abhubweg der Voröffnungsscheibe 35.

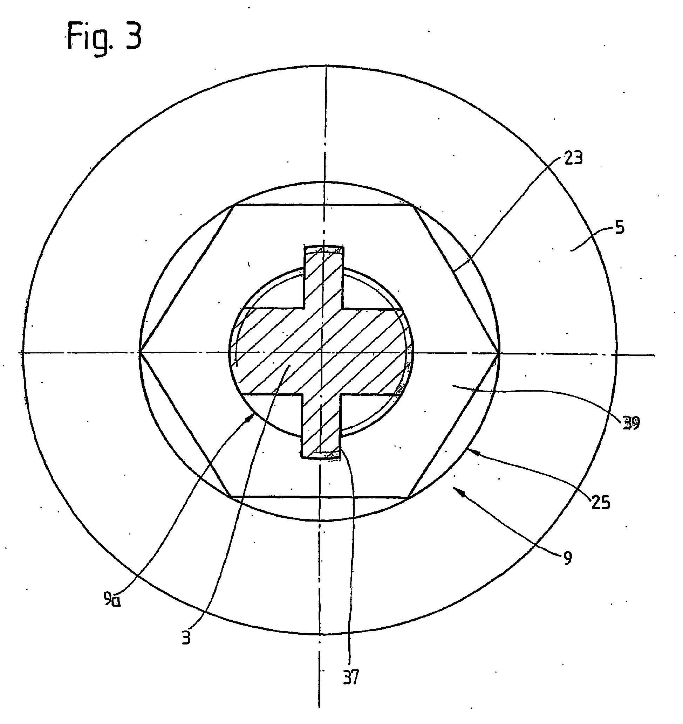

Bei der Montage werden die Anschlagscheibe 11, die Ventilscheiben 13, der Kolben 5, die Drosselscheibe 17 auf das zapfenförmige Ende der Kolbenstange 3 gefädelt. In einer Vorrichtung wird der Kolben axial gegen einen Absatz 3a der Kolbenstange vorgespannt. Anschließend schraubt man die Kolbenmutter 9 mit einer definierten Vorspannung gegen den Kolben 5. Bei der nun vorliegenden Baueinheit wird mittels nicht dargestellter Umformwerkzeuge eine gezielte Deformation 37 von Gewindeteilen vorgenommen. Um einen möglichst vollständigen Toleranzausgleich bei den geschichteten Teilen auf dem zapfenförmigen Ende der Kolbenstange zu erreichen, werden die Umformwerkzeuge axial bis zur Anlage auf einer Stirnfläche 39 der Kolbenmutter angefahren. Danach werden die Umformwerkzeuge in radialer Richtung tangential in das Gewinde 19 der Kolbenstange gedrückt. Dabei setzt die Deformation des Gewindes bei einem Durchmesser an, der kleiner ist als der Kerndurchmesser des Gewindes 19. Wie aus der Fig. 2 und der Fig. 3 ersichtlich ist, erfolgt die Deformation symmetrisch zu Querschnitt des Gewindes. Des weiteren sind die Deformationen derart radial tief ausgeführt, dass sich die deformierten Gewindeteile 37 gegenseitig abstützen. Die deformierten Gewindeteile wachsen über den Außendurchmessers 9a des Gewindes 19 hinaus und legen sich auf die Stirnfläche der Kolbenmutter 9, wobei die gesamte Deformation parallel zur Stirnfläche der Kolbenmutter verläuft. Die deformierten Gewindeteile 37 stellen ein Sicherungsmittel dar, indem sie eine axiale Lösebewegung zwischen dem Gewinde der Kolbenmutter und dem Gewinde der Kolbenstange durch ihre Anschlagfunktion verhindern.

Bei der weiteren Montage wird die Voröffnungsscheibe 35 zusammen mit dem Dichtungsring 27 und dem Stützring 29 auf den Führungsabschnitt 25 der Kolbenmutter 9 geschoben. Anschließend erfolgt die Vorspannung der vorgenannten Bauteile durch die Feder 31. Eine möglichst genau Dämpfkraft wird durch die angepasste Vorspannungslänge der Feder 31, die mit der Einstellmutter veränderbar ist, erreicht. Um auf jeden Fall konstruktiv auch ungünstigste Kombinationen von den toleranzbehafteten Bauteilen kompensieren zu können, ist der Einstellweg 41 der Einstellmutter größer als der mögliche Restfederweg der Feder 31. Deshalb ist die axiale Höhe H der deformierten Gewindeteile beschränkt.

Die Art der Kolbenbefestigung ist keinesfalls auf den beschriebenen Kolben- oder Schwingungsdämpfertyp beschränkt.

## Patentansprüche

1. Kolbenbefestigung an einer Kolbenstange, wobei die Kolbenstange einen Gewindeabschnitt aufweist, der mit einem Gegengewinde eines Befestigungsmittels des Kolbens in Eingriff steht, wobei die Kolbenbefestigung Sicherungsmittel aufweist, die das Lösen des Kolbens an der Kolbenstange verhindern sollen,
**dadurch gekennzeichnet,**
**dass** die Sicherungsmittel von deformierten Gewindeteilen (37) der Kolbenstange (3) gebildet wird, wobei die deformierten Gewindeteile (37) auf einer Stirnfläche (39) des Befestigungsmittels (9) anliegen und die Deformation des Gewindes (19) der Kolbenstange (3) bis auf einen Durchmesser ausgeführt ist, der kleiner ist als der Kerndurchmesser des Gewindes (19).

2. Kolbenbefestigung nach Anspruch 1,
**dadurch gekennzeichnet,**
**dass** die Deformation tangential am Gewinde (19) ausgeführt ist.

3. Kolbenbefestigung nach einem der Ansprüche 1 oder 2,
**dadurch gekennzeichnet,**
**dass** die Deformation am Gewinde (19) symmetrisch zum Querschnitt des Gewindes (19) ausgeführt ist.

4. Kolbenbefestigung nach einem der Ansprüche 1 bis 3,
**dadurch gekennzeichnet,**
**dass** die Deformation derart radial tief ausgeführt ist, dass sich die deformierten Gewindeteil (37) gegeneinander abstützen.

5. Kolbenbefestigung nach einem der Ansprüche 1 bis 4,
**dadurch gekennzeichnet,**
**dass** die Deformation parallel zur Stirnfläche (39) des Befestigungsmittels (9) ausgeführt ist.

6. Kolbenbefestigung nach einem der Ansprüche 1 bis 5,
**dadurch gekennzeichnet,**
**dass** auf dem Gewinde (19) zusätzlich zu dem Befestigungsmittel (9) eine Einstellmutter (33) für eine Feder (31) aufgeschraubt ist, wobei die axiale Höhe (H) der deformierten Gewindeteile (37) derart bemessen ist, dass ein Einstellweg (41) zwischen den deformierten Gewindeteilen (37) und der Einstellmutter (33) größer ist als der Restfederweg der Feder (31).

## Claims

1. Piston fastening means on a piston rod, the piston rod having a thread section which is in engagement with a corresponding thread of a fastening means of the piston, the piston fastening means having securing means which are intended to prevent detachment of the piston from the piston rod, **characterized in that** the securing means is formed by deformed thread parts (37) of the piston rod (3), the deformed thread parts (37) bearing against an end face (39) of the fastening means (9) and the deformation of the thread (19) of the piston rod (3) being effected down to a diameter which is smaller than the core diameter of the thread (19).

2. Piston fastening means according to Claim 1, **characterized in that** the deformation is effected tangentially on the thread (19).

3. Piston fastening means according to either of Claims 1 and 2, **characterized in that** the deformation on the thread (19) is effected symmetrically with respect to the cross section of the thread (19).

4. Piston fastening means according to one of Claims 1 to 3, **characterized in that** the deformation is effected to such a radially deep extent that the deformed thread parts (37) are supported with respect to one another.

5. Piston fastening means according to one of Claims 1 to 4, **characterized in that** the deformation is carried out parallel to the end face (39) of the fastening means (9).

6. Piston fastening means according to one of Claims 1 to 5, **characterized in that** an adjusting nut (33) for a spring (31) is screwed on in addition to the fastening means (9), the axial height (H) of the deformed thread parts (37) being dimensioned in such a way that an adjusting travel (31) between the deformed thread parts (37) and the adjusting nut (33) is greater than the residual spring travel of the spring (31).

## Revendications

1. Dispositif de fixation de piston sur une tige de piston, la tige de piston présentant une partie filetée qui est en prise avec un filetage complémentaire d'un moyen de fixation du piston, le dispositif de fixation de piston présentant des moyens d'assujettissement qui doivent empêcher le piston de se défaire de la tige de piston, **caractérisé en ce que** les moyens d'assujettissement sont formés par des parties filetées déformées (37) de la tige de piston (3), les parties filetées déformées (37) s'appliquant sur une face frontale (39) du moyen de fixation (9) et la déformation du filetage (19) de la tige de piston (3) étant effectuée jusqu'à un diamètre qui est inférieur au diamètre d'âme du filetage (19).

2. Dispositif de fixation de piston selon la revendication 1, **caractérisé en ce que** la déformation est réalisée tangentiellement sur le filetage (19).

3. Dispositif de fixation de piston selon la revendication 1 ou 2, **caractérisé en ce que** la déformation du filetage (19) est réalisée symétriquement à la section du filetage (19).

4. Dispositif de fixation de piston selon l'une quelconque des revendications 1 à 3, **caractérisé en ce que** la déformation est réalisée avec une profondeur radiale telle que les parties filetées déformées (37) se soutiennent mutuellement.

5. Dispositif de fixation de piston selon l'une quelconque des revendications 1 à 4, **caractérisé en ce que** la déformation est réalisée parallèlement à la face frontale (39) du moyen de fixation (9).

6. Dispositif de fixation de piston selon l'une quelconque des revendications 1 à 5, **caractérisé en ce qu'**un écrou de réglage (33) pour un ressort (31) est vissé en plus du moyen de fixation (9) sur le filetage (19), la hauteur axiale (H) des parties filetées déformées (37) étant dimensionnée de telle sorte qu'une course de réglage (41) entre les parties filetées déformées (37) et l'écrou de réglage (33) est supérieure à la course de ressort résiduelle du ressort (31).
